# EUROPEAN PATENT APPLICATION

(11) **EP 4 553 295 A2**
(43) Date of publication of application: **14.05.2025**
(21) Application number: 24203675.4
(22) Date of filing: 30.09.2024
(51) Int. Cl.: F01D 25/24, F01D 25/30

(54) **MECHANISM FOR CONNECTING HIGH TEMPERATURE DUCTS FOR AIRCRAFT ENGINE**

(30) Priority: 16.10.2023 US 202318487618
(71) Applicant: Pratt & Whitney Canada Corp., Longueuil, QC J4G 1A1 (CA)
(72) Inventor: GOVER, Christopher, Longueuil (CA); LAMARCHE, Gabrielle, Saint-Roch de Richelieu (CA); LACROIX, Guillaume, Saint-Roch de Richelieu (CA)
(74) Representative: Dehns

(57) **Abstract**

An air duct interface (112; 200; 300) for an aircraft engine (100) is disclosed herein. The air duct interface (112; 200; 300) includes a first air duct (106), a first outer wall (202), a mating interface (204) disposed circumferentially around the first outer wall (202), a second air duct (110), a second outer wall (232), and a gasket interface (234) disposed circumferentially around the second outer wall (232). The mating interface (204) includes a first angled portion (210) extending away from the first outer wall (202) in a first direction and a second angled portion (212) extending away from the first outer wall (202) in a second direction opposite the first direction. The gasket interface (234) includes a first portion (240) extending away from the second outer wall (232) in the first direction, wherein the first portion (240) is configured to engage the first angled portion (210) and a second portion (242) extending away from the second outer wall (232) in the second direction, wherein the second portion is configured to engage the second angled portion (212).

## Description

### FIELD

The present disclosure generally relates to aircraft engines, and more particularly, to connection mechanisms for high temperature air ducting for aircraft engines.

### BACKGROUND

Aircraft engines use ducting to transfer gasses from one part of the aircraft engine to another. For example, a duct is used to pass high temperature gases from a combustion engine through to the turbine section of the aircraft engine. Aircraft engines are generally installed in nacelles that are mounted on the aircraft. However, some combinations of aircraft engines and nacelles have space and access limitations that make it difficult to use conventional bolted joint configurations to attached the ducting to the aircraft engine. Additionally, conventional solutions locate bolted joints in the path of the high temperature which subjects the bolts to high temperatures reducing the lifespan of the bolted joint introducing performance losses.

### SUMMARY

According to an aspect, an air duct interface is disclosed herein. The air duct interface includes a first air duct including a first outer wall, a mating interface disposed circumferentially around the first outer wall, the mating interface including a first angled portion extending away from the first outer wall in a first direction, and a second angled portion extending away from the first outer wall in a second direction that is opposite the first direction, a second air duct including a second outer wall, a gasket interface disposed circumferentially around the second outer wall, the gasket interface including a first portion extending away from the second outer wall in the first direction, wherein the first portion is configured to engage the first angled portion, and a second portion extending away from the second outer wall in the second direction, wherein the second portion is configured to engage the second angled portion, and a first fastener configured to secure the second angled portion to the second portion.

In various embodiments, the air duct interface further includes a first clamp configured to be coupled to the first portion, the first clamp configured to receive the first angled portion when coupled to the first portion and a second clamp configured to be coupled to the second portion, the second clamp engaging the second angled portion and securing the mating interface to the gasket interface. In various embodiments, the first angled portion has a top surface having a first angle with respect to the first direction and the first clamp having a second angle with respect to the first direction, the first angle and the second angle being complementary.

In various embodiments, the second angled portion has a first top surface having a first angle with respect to the second direction and the second portion has a second top surface having the first angle, wherein the second clamp is configured to engage the first top surface and the second top surface. In various embodiments, the first angled portion includes a cavity with an opening in the second direction and wherein the first portion is configured to slide into the cavity.

In various embodiments, the air duct interface further includes a first hole formed through the second angled portion, the first hole perpendicular to a first top surface of the second angled portion and a second hole formed in the second portion, the second hole perpendicular to a second top surface of the second portion, wherein the first fastener is configured to be inserted through the first hole and into the second hole. In various embodiments, the first fastener is configured to be inserted through the second clamp and into the second portion.

According to a further aspect, also disclosed herein is a system for connecting an air duct to an aircraft engine. The system includes a mating interface including a first angled portion extending in a first direction wherein the first angled portion includes a flat bottom surface and a top surface having a slope in a second direction that is perpendicular to the first direction, and a second angled portion extending in a third direction that is opposite the first direction, a gasket interface including a first portion extending in the first direction wherein the first portion includes a flat top surface, and a second portion extending in the third direction, wherein the second portion includes a top face that has a slope in the second direction, a first clamp having a first bottom surface with a slope in the second direction, the first clamp configured to be coupled to the first portion and further configured to receive the first angled portion between the first bottom surface and the first portion, and a second clamp having a second bottom surface that is configured to be coupled to the second portion and to receive the second angled portion.

In various embodiments, the system further includes an exhaust duct including a first outer wall and a first opening, the first outer wall disposed circumferentially the first opening, wherein the mating interface is disposed circumferentially around the first outer wall and a turbine section inlet including a second outer wall and a second opening, the second outer wall disposed circumferentially around the second opening, wherein the gasket interface is disposed circumferentially around the second outer wall.

In various embodiments, the first clamp includes a first top surface extending in the first direction, a vertical side surface extending in the second direction, a bottom surface extending in the third direction, and the first bottom surface extending from the bottom surface to the first top surface. In various embodiments, the system further includes a third angled portion of the mating interface extending in a fifth direction perpendicular to the first direction and the second direction, the third angled portion including the flat bottom surface, and a third portion extending in the fifth direction wherein the third portion includes the flat top surface, and a third clamp having a third bottom surface with a slope in the second direction, the third clamp configured to be coupled to the third portion and further configured to receive the third angled portion between the third bottom surface and the third portion.

In various embodiments, the system further includes a fourth angled portion extending in a sixth direction opposite the fifth direction, a fourth portion extending in the sixth direction, wherein the fourth portion includes a first top face that has a slope in the second direction, and a fourth clamp having a fourth bottom surface that is configured to be coupled to the fourth portion and to receive the fourth angled portion. In various embodiments, the system further includes a first fastener inserted through the first clamp perpendicular to the flat top surface of the first portion, and a second fastener inserted through the second clamp perpendicular to the top face of the second portion. In various embodiments, the second clamp further includes a bottom surface opposite a second top surface, the bottom surface being parallel to the second top surface.

According to a further aspect, also disclosed herein is a method of manufacture, including installing an aircraft engine in a nacelle of an aircraft, the aircraft engine including a turbine section inlet wherein access to at least one side of the turbine section inlet is limited after installing the aircraft engine in the nacelle, attaching an exhaust duct to the turbine section inlet of the aircraft engine with limited access to the turbine section inlet, the attaching including securing a mating interface of the exhaust duct to a gasket interface of the turbine section inlet, and securing the mating interface of the exhaust duct to the gasket interface of the turbine section inlet using at least one fastener.

In various embodiments, the method further includes coupling a first clamp to a first side of the gasket interface of the turbine section inlet before installing the aircraft engine in the nacelle, and sliding a first side of the mating interface of the exhaust duct into place between the first clamp and the gasket interface. In various embodiments, the method further includes coupling a second clamp to a second side of the gasket interface, the second side being opposite the first side, after installing the aircraft engine in the nacelle, and securing the second clamp to the second side of the gasket interface using the at least one faster, the second clamp securing the mating interface to the gasket interface.

In various embodiments, the method further includes coupling a third clamp to a third side of the gasket interface, the third side adjacent the first side and the second side, before installing the aircraft engine in the nacelle, and sliding a third side of the mating interface of the exhaust duct into place between the third clamp and the gasket interface. In various embodiments, a first side of the mating interface includes a cavity formed therein, the cavity configured to receive a first side of the gasket interface, wherein attaching the exhaust duct to the turbine section inlet includes sliding the mating interface in a first direction over the gasket interface until the cavity formed in the first side of the mating interface is past a first end of the gasket interface, and sliding the mating interface in a second direction opposite the first direction until the first side of the gasket interface engages the cavity.

In various embodiments, the securing the mating interface to the gasket interface further includes inserting the at least one fastener through a first hole formed through the mating interface and into a second hole formed in the gasket interface.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIGS. 1A and 1B illustrate a front view and a side view of an aircraft engine, in accordance with various embodiments.
FIGS. 2A, 2B, and 2C illustrate views of an air ducting interface for use with an aircraft engine including a system of clamps to connect an air duct to the aircraft engine, in accordance with various embodiments.
FIGS. 3A, 3B, and 3C illustrate views of an air ducting interface for use with an aircraft engine for connecting an air duct to the aircraft engine, in accordance with various embodiments.
FIG. 4 illustrates a method of installing an aircraft engine in a nacelle and coupling air duct to the engine, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. While these exemplary embodiments are described in sufficient detail to enable those skilled in the art to practice the invention, it should be understood that other embodiments may be realized and that logical, chemical and mechanical changes may be made without departing from the spirit and scope of the invention. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Disclosed herein is an air ducting interface configured to couple a first air duct to a second air duct. In various embodiments, the first duct is an exhaust duct and the second air duct is a turbine section inlet of an aircraft engine. In various embodiments, the air ducting interface includes four clamps that are configured to hold the first duct to the second duct. In various embodiments, two clamps are configured to be installed on the second duct prior to installing the aircraft engine in a nacelle of an aircraft. In various embodiments, the two clamps are coupled to an interface of the second duct. In various embodiments, the two clamps and the interface of the second duct form an opening that is configured to receive an angle portion of an interface of the first duct. In various embodiments, the other two clamps are configured to be installed after the aircraft engine is installed in the nacelle. In various embodiments, the other two clamps secure the first duct to the second duct, including securing the angled portion of the interface to the first two clamps.

In various embodiments, the interface of the second duct includes an first angled face and a second angled face. In various embodiments, the interface of the first duct includes a third angled face that is complementary to the first angled face and a fourth angled face that is complementary to the second angled face. In various embodiments, the third angled face engages the second angled face to hold the first duct in place against the second duct. In various embodiments, one or more fasteners may be used to secure the further angled face to the second angled face.

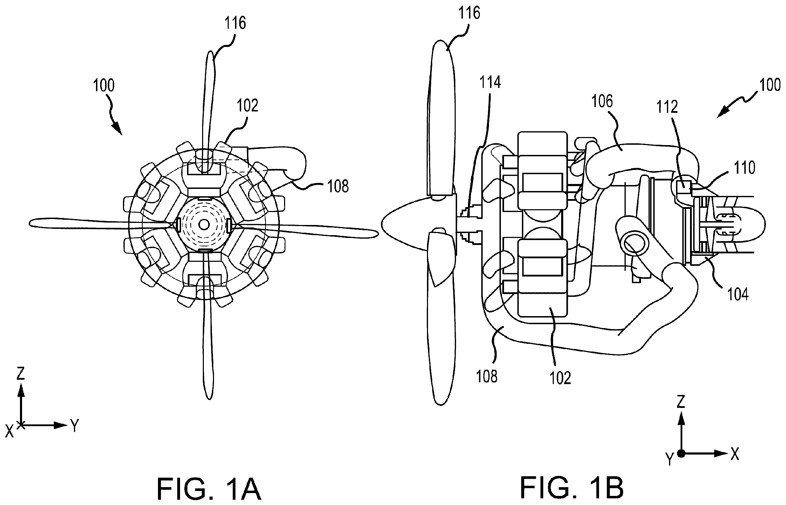

Referring now to FIGS. 1A and 1B, an aircraft engine 100 is illustrated, in accordance with various embodiments. FIG. 1A illustrates a front view of aircraft engine 100 and FIG. 1B illustrates a side view of aircraft engine 100. Aircraft engine 100 includes a combustion engine 102, a turbine hot section 104, a combustion engine exhaust pipe 106, a compressor booster pipe 108, a turbine section inlet 110, an air ducting interface 112, a drive shaft 114, and a propeller assembly 116. Combustion engine 102 receives fuel (e.g., jet fuel) and combusts the fuel in order to provide power to drive shaft 114, causing drive shaft 114 to rotate. Propeller assembly 116 is coupled to drive shaft 114 and rotates in response to the rotation of drive shaft 114. Fuel combustion within combustion engine 102 further heat and high temperature gases.

Compressor booster pipe 108 is coupled to combustion engine 102 at a first end and to a compress of aircraft engine 100 at a second end. Exhaust pipe 106 is couple to combustion engine 102 at a first end and to turbine hot section 104 at a second end. Specifically, exhaust pipe 106 is coupled to turbine section inlet 110 of turbine hot section 104. The heated gases exit combustion engine 102, flow through exhaust pipe 106, and into turbine hot section 104 through turbine section inlet 110. Air ducting interface 112 is the interface between exhaust pipe 106 and turbine hot section 104.

During installation, aircraft engine 100 is installed on an aircraft, and more specifically, within a nacelle installed on the aircraft without exhaust pipe 106 and compressor booster pipe 108. After installing aircraft engine 100 in the nacelle, exhaust pipe 106 and compressor booster pipe 108 are installed on, or coupled to, aircraft engine 100. Specifically, the first end of exhaust pipe 106 is coupled to combustion engine 102 and the second end of exhaust pipe 106 is coupled to turbine section inlet 110 of turbine hot section 104. In various embodiments, air ducting interface 112 may be used to facilitate installation of exhaust pipe 106 when conventional interface systems cannot be used to due the limited space available within the nacelle after installation of aircraft engine 100.

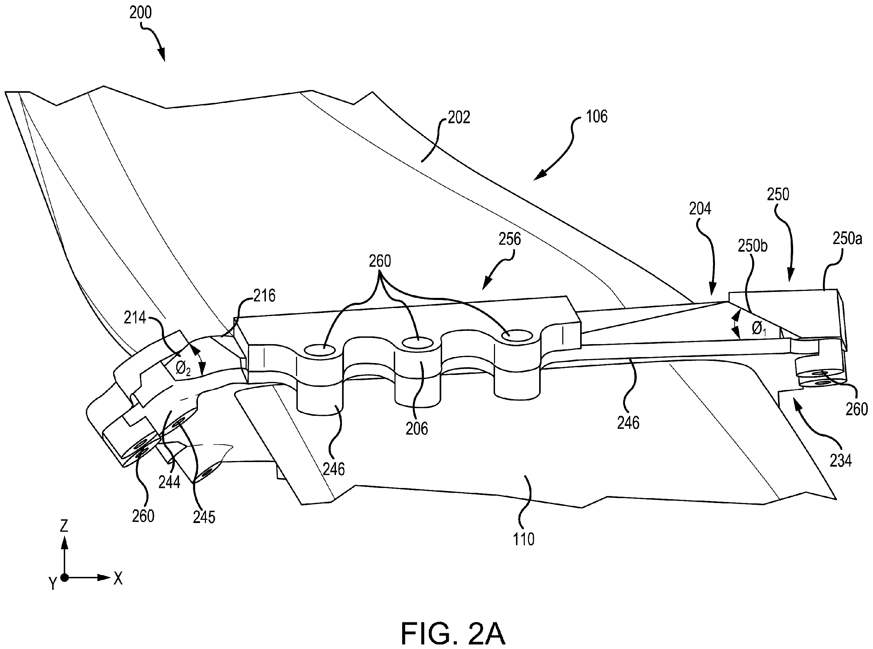

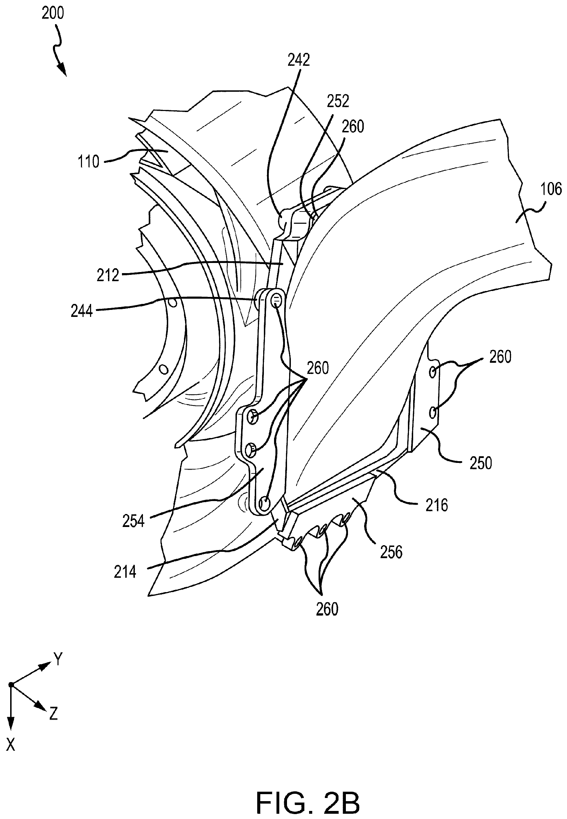

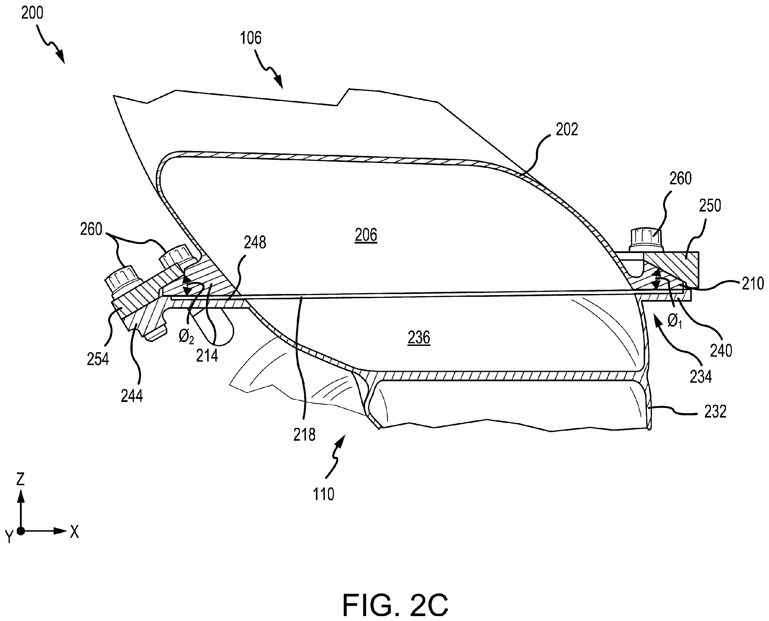

Referring now to FIGS. 2A-2C, different views of an air ducting interface 200 after installation of exhaust pipe 106 onto turbine section inlet 110 are illustrated, in accordance with various embodiments. In various embodiments, air ducting interface 200 may be an example of air ducting interface 112 described above in FIGS. 1A and 1B. FIG. 2A illustrates a side view of air ducting interface 200, FIG. 2B illustrates a perspective view of air ducting interface 200, and FIG. 2C illustrates a cross section view of air ducting interface 200. Air ducting interface 200 includes a system for connecting exhaust pipe 106 to turbine section inlet 110. exhaust pipe 106 is disposed above (e.g., in the positive z-direction) turbine section inlet 110, as illustrated in FIG. 2A.

Exhaust pipe 106 includes a first outer wall 202, a mating interface 204, and an opening 206 that is at least partially defined circumferentially by first outer wall 202 and mating interface 204. Mating interface 204 extends circumferentially around first outer wall 202 outward (e.g., perpendicular to the z-axis) and away from a first end of first outer wall 202. That is, both first outer wall 202 and mating interface 204 extend circumferentially around opening 206 with first outer wall 202 located between mating interface 204 and opening 206. Mating interface 204 includes a first angled portion 210 extending in a first direction (e.g., the positive x-direction), a second angled portion 212 extending in a second direction perpendicular to the first direction (e.g., the negative y-direction), a third angled portion 214 extending in a third direction opposite the first direction (e.g., the negative x-direction), and a fourth angled portion 216 extending in a fourth direction opposite the second direction (e.g., the positive y-direction).

Mating interface 204 has a flat bottom surface 218 (e.g., the negative z-direction). Accordingly, each angled portion 210, 212, 214, 216 includes flat bottom surface 218 and an angled top surface. That is, first angled portion 210 has a top surface that slopes downward (e.g., in the negative z-direction) and away from first outer wall 202 in the first direction at a first angle Ø₁ with respect to flat bottom surface 218. Second angled portion 212 has a top surface that slopes downward (e.g., in the negative z-direction) and away from first outer wall 202 in the second direction. Third angled portion 214 has a top surface that slopes downward (e.g., in the negative z-direction) and away from first outer wall 202 in the third direction at a second angle Ø₂ with respect to flat bottom surface 218. Fourth angled portion 216 has a top surface that slopes downward (e.g., in the negative z-direction) and away from first outer wall 202 in the fourth direction. In various embodiments, the slope of each top surface with respect to flat bottom surface 218 may be the same each of the others slopes. For example, first angle Ø₁ may be about equal to second angle Ø₂. In various embodiments, the slope of each top surface with respect to flat bottom surface 218 may be different than one or more of the other slopes. For example, first angle Ø₁ may be less than or greater than second angle Ø₂.

Turbine section inlet 110 a second outer wall 232, a gasket interface 234, and a second opening 236 that is at least partially defined circumferentially by second outer wall 232 and gasket interface 234. Gasket interface 234 extends circumferentially around second outer wall 232 outward (e.g., perpendicular to the z-axis) and away from a first end of second outer wall 232. That is, both second outer wall 232 and gasket interface 234 extend circumferentially around second opening 236 with second outer wall 232 located between gasket interface 234 and second opening 236. Gasket interface 234 includes a first portion 240 extending in the first direction (e.g., the positive x-direction), a second portion 242 extending in the second direction perpendicular to the first direction (e.g., the negative y-direction), a third portion 244 extending in the third direction opposite the first direction (e.g., the negative x-direction), and a fourth portion 246 extending in the fourth direction opposite the second direction (e.g., the positive y-direction).

Gasket interface 234 has a flat top surface 248 (e.g., the positive z-direction) that is configured to mate with flat bottom surface 218 of mating interface 204. Accordingly, each portion 240, 242, 244, 246 includes flat top surface 248. First portion 240 extends out from second outer wall 232 parallel to flat top surface 248 (e.g., along the x-axis). Second portion 242 extends out from second outer wall 232 parallel to flat top surface 248. Third portion 244 is angled such that third portion 244 extends out from second outer wall 232 parallel to flat top surface 248 at first and then is angled downward (e.g. in the negative z-direction) away from flat top surface 248. Fourth portion 246 is angled such that fourth portion 246 extends out from second outer wall 232 parallel to flat top surface 248 at first and then is angled downward (e.g. in the negative z-direction) away from flat top surface 248. In various embodiments, the downward angle of third portion 244 and fourth portion 246 is about the same as second angle Ø₂.

Exhaust pipe 106 is coupled to turbine section inlet 110 by a four clamps, a first clamp 250, a second clamp 252, a third clamp 254, and a fourth clamp 256. In various embodiments, after installing aircraft engine 100, the nacelle does not have sufficient room to couple exhaust pipe 106 to turbine section inlet 110 using conventional techniques. First clamp 250 is configured to be coupled to first portion 240 and second clamp 252 is configured to be coupled to second portion 242 prior to installing aircraft engine 100 in a nacelle. That is, both first clamp 250 and second clamp 252 are installed on turbine section inlet 110 of aircraft engine 100 prior to installing aircraft engine 100 in the nacelle. After installing aircraft engine 100 onto the nacelle, exhaust pipe 106 is fit into place using first clamp 250 and second clamp 252 as guides and third clamp 254 and fourth clamp 256 are used to secure exhaust pipe 106 to turbine section inlet 110.

First clamp 250 and second clamp 252 are both secured to gasket interface 234 using one or more fasteners 260. In various embodiments, the one or more fasteners 260 may include bolts, screws, rivets, or welding, among others. The one or more fasteners 260 are installed perpendicular to flat top surface 248 of gasket interface 234. First clamp 250 includes a top side 250a and a bottom side 250b. Top side 250a is flat and about parallel with flat bottom surface 218 of mating interface 204. This allows the fasteners to extend through first clamp 250 and perpendicular to top side 250a and flat top surface 248. Bottom side 250b is angled and complementary to first angle Ø₁. That is, bottom side 250b is configured to contact and engage first angled portion 210 along a bottom face of bottom side 250b and a top face of first angled portion 210. Second clamp 252 is similar in design and function to first clamp 250 including a flat top surface and an angled bottom surface that is configured to engage second angled portion 212.

After being installed, there is sufficient space between first clamp 250 and first portion 240 for first angled portion 210 to slide between first clamp 250 and first portion 240. Similarly, there is sufficient space between second clamp 252 and second portion 242 for second angled portion 212 to slide between second clamp 252 and second portion 242. In this manner, first clamp 250 and second clamp 252 prevent exhaust pipe 106 from moving in the first direction (e.g., in the positive x-axis) and the second direction (e.g., in the negative y-axis).

After placing exhaust pipe 106 in position using first clamp 250 and second clamp 252, third clamp 254 and fourth clamp 256 are placed and secured to third portion 244 and fourth portion 246, respectively, using one or more fasteners 260. In various embodiments, the one or more fasteners 260 may include bolts, screws, rivets, or welding, among others. The one or more fasteners 260 are installed perpendicular to flat top surface 248 of gasket interface 234 and into one or more holes 245 formed into gasket interface 234 perpendicular to flat top surface 248. That is, the one or more fasteners 260 are installed perpendicular to flat top surface 248 of the angled portions of third portion 244 and fourth portion 246. As the one or more fasteners 260 are tightened to secure third clamp 254 and fourth clamp 256, a seal between mating interface 204 of exhaust pipe 106 and gasket interface 234 is tightened. In particular, first angled portion 210 and second angled portion 212 are forced into tighter contact with first clamp 250 and second clamp 252. This ensures an air tight seal between exhaust pipe 106 and turbine section inlet 110. In various embodiments, a gasket may be place within a groove formed around the circumference of gasket interface 234. The gasket may be compressible such that the gasket is further compressed as the one or more fasteners 260 of third clamp 254 and fourth clamp 256 are tightened, thereby ensuring a sufficient seal is created.

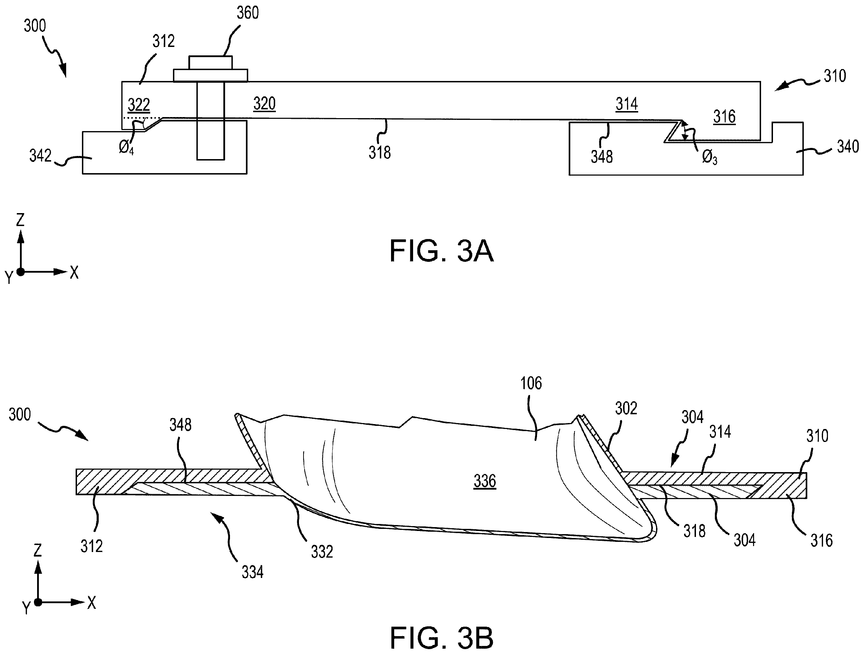

Referring now to FIGS. 3A-3C, different views of an air ducting interface 300 after installation of exhaust pipe 106 onto turbine section inlet 110 are illustrated, in accordance with various embodiments. In various embodiments, air ducting interface 300 may be an example of air ducting interface 112 described above in FIGS. 1A and 1B. FIG. 3A illustrates a diagrammatic side view of air ducting interface 300, FIG. 3B illustrates a cross section side view of air ducting interface 300, and FIG. 2C illustrates a perspective view of air ducting interface 300. Air ducting interface 300 includes a system for connecting exhaust pipe 106 to turbine section inlet 110. exhaust pipe 106 is disposed above (e.g., in the positive z-direction) turbine section inlet 110, as illustrated in FIG. 3B.

Air ducting interface 300 includes similar components to those described above in FIGS. 2A-2C, including a first outer wall 302, a mating interface 304, a first opening 306, a flat bottom surface 318, a second outer wall 332, a gasket interface 334, a second opening 336, a flat top surface 348, and one or more fasteners 360, descriptions of which may not be repeated below.

Mating interface 304 includes a first mating portion 310 extending in a first direction (e.g., in the positive x-direction) and a second mating portion 312 extending in a second direction opposite the first direction (e.g., in the negative x-direction). First mating portion 310 includes a first portion 314 that extends from first outer wall 302 in the first direction and a second portion 316 that extends from first portion 314 in the first direction. Second portion 316 extends below flat bottom surface 318 (e.g., in the negative z-direction) and is angled inward (e.g., in the negative x-direction) toward first outer wall 302. That is, second portion 316 is angled toward exhaust pipe 106 at a third angle Ø₃ with respect to a horizontal plane parallel with flat bottom surface 318 (e.g., the x-axis). First portion 314 and second portion 316 forming a cavity.

Second mating portion 312 includes a first portion 320 that extends from first outer wall 302 in the second direction and a second portion 322 that extends from first portion 320 in the second direction. Second portion 322 extends below flat bottom surface 318 (e.g., in the negative z-direction) and is angled away (e.g., in the negative x-direction) first outer wall 302. That is, second portion 322 is angled away from exhaust pipe 106 at a fourth angle Ø₄ with respect to flat bottom surface 318. Second mating portion 312, and more specifically, first portion 320 of second mating portion 312, includes one or more holes extending perpendicular to flat bottom surface 318 and configured to receive the one or more fasteners 360.

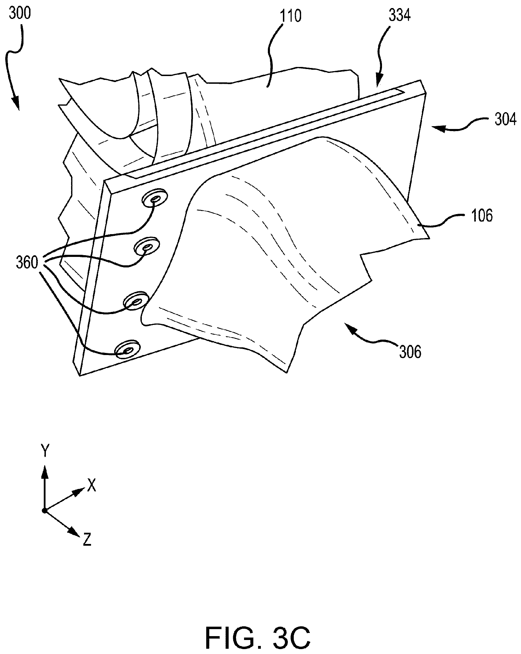

Gasket interface 334 includes a first gasket portion 340 extending in the first direction (e.g., in the positive x-direction) and a second gasket portion 342 extending in the second direction (e.g., in the negative x-direction). First gasket portion 340 includes a first end that is angled to complement third angle Ø₃ of second portion 316 of first mating portion 310. That is, the first end of first gasket portion 340 is configured to be inserted into and received by second portion 316 of first mating portion 310, as illustrated in FIGS. 3B and 3C. That is, first gasket portion 340 may be inserted into the cavity formed by first portion 314 and second portion 316. In various embodiments, first gasket portion 340 may extend below and past second portion 316 of first mating portion 310 and include an opening that is configured to receive second portion 316 and secure second portion 316 to first gasket portion 340, as illustrated in FIG. 3A.

Second gasket portion 342 includes a first end that is angled to complement fourth angle Ø₄ of second portion 322 of second mating portion 312. That is, the first end of second gasket portion 342 is configured to contact second portion 322 of second mating portion 312, as illustrated in FIGS. 3B and 3C. In various embodiments, second gasket portion 342 may extend below and past second portion 322 of second mating portion 312, as illustrated in FIG. 3A. Second gasket portion 342 further includes one or more holes extending perpendicularly through flat top surface 348 that are configured to receive the one or more fasteners 360.

This configuration allows for installation of aircraft engine 100 into nacelles that do not provide sufficient space for the use of conventional bolt joint systems. After installing aircraft engine 100 into the nacelle, exhaust pipe 106, and more specifically, mating interface 304 may slide over gasket interface 334 of turbine section inlet 110. Mating interface 304 slides over gasket interface 334 in the first direction (e.g., in the positive x-direction) until first mating portion 310 slides past first gasket portion 340. Mating interface 304 then slides in the second direction (e.g., in the negative x-direction) until first mating portion 310 engages first gasket portion 340. This also allows second mating portion 312 to extend over the first end of second gasket portion 342 so that flat bottom surface 318 contacts flat top surface 348 along the length and width of mating interface 304 and gasket interface 334. The one or more fasteners 360 are inserted through the holes in mating interface 304 and gasket interface 334 and tightened to secure exhaust pipe 106 to turbine section inlet 110.

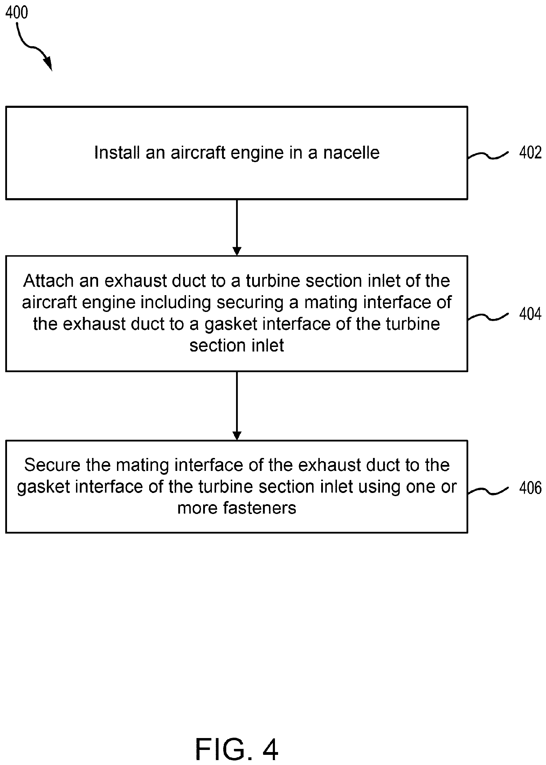

Referring now to FIG. 4, a method 400 of installing an aircraft engine into a nacelle including installing an exhaust duct is illustrated, in accordance with various embodiments. In various embodiments, method 400 may be used with air ducting interface 200. In various embodiments, method 400 may be used with air ducting interface 300. The steps of method 400 may be performed in a different and one or more steps of method 400 may be removed. In various embodiments, additional steps may be added to method 400.

At block 402, an aircraft engine (e.g., aircraft engine 100) is installed into a nacelle of an aircraft. The nacelle may not provide sufficient room to access portions of aircraft engine 100 (e.g., turbine section inlet 110) for installing air ducts (e.g., exhaust pipe 106). In various embodiments, one or more clamps (e.g., first clamp 250 and second clamp 252) may be coupled to a gasket interface (e.g., gasket interface 234) of turbine section inlet 110 prior to installing aircraft engine 100 into the nacelle.

At block 404, exhaust pipe 106 is attached to turbine section inlet 110 of aircraft engine 100 including securing a mating interface (e.g., mating interface 204, 304) of exhaust pipe 106 to a gasket interface (e.g., gasket interface 234, 334) of turbine section inlet 110. In various embodiments, mating interface 204 of exhaust pipe 106 may be inserted into gaps formed between first clamp 250 and gasket interface 234 and between second clamp 252 and gasket interface 234. In various embodiments, mating interface 304 slides over top of gasket interface 334 in a first direction and slides back in a second direction opposite the first direction to engage gasket interface 334.

At block 406, the mating interface is secured to the gasket interface using one or more fasteners (e.g., the one or more fasteners 260, 360). In various embodiments, one or more clamps (e.g., third clamp 254 and fourth clamp 256) may be coupled to gasket interface 234 using the one or more fasteners 260 to secure mating interface 204 in place. In various embodiments, the one or more fasteners 360 may be inserted through mating interface 304 and into gasket interface 334 to secure mating interface 304 to gasket interface 334.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 5% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 5% of a stated amount or value.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible in light of the above teaching.

## Claims

1. An air duct interface, comprising:
a first air duct including a first outer wall;
a mating interface disposed circumferentially around the first outer wall, the mating interface including:
a first angled portion extending away from the first outer wall in a first direction; and
a second angled portion extending away from the first outer wall in a second direction that is opposite the first direction;
a second air duct including a second outer wall;
a gasket interface disposed circumferentially around the second outer wall, the gasket interface including:
a first portion extending away from the second outer wall in the first direction, wherein the first portion is configured to engage the first angled portion; and
a second portion extending away from the second outer wall in the second direction, wherein the second portion is configured to engage the second angled portion; and
a first fastener configured to secure the second angled portion to the second portion.

2. The air duct interface of claim 1, further comprising:
a first clamp configured to be coupled to the first portion, the first clamp configured to receive the first angled portion when coupled to the first portion; and
a second clamp configured to be coupled to the second portion, the second clamp engaging the second angled portion and securing the mating interface to the gasket interface.

3. The air duct interface of claim 2, wherein the first angled portion has a top surface having a first angle with respect to the first direction and the first clamp having a second angle with respect to the first direction, the first angle and the second angle being complementary.

4. The air duct interface of claim 2 or 3, wherein the second angled portion has a first top surface having a first angle with respect to the second direction and the second portion has a second top surface having the first angle, wherein the second clamp is configured to engage the first top surface and the second top surface.

5. The air duct interface of any preceding claim, wherein the first angled portion includes a cavity with an opening in the second direction and wherein the first portion is configured to slide into the cavity.

6. The air duct interface of any preceding claim, further comprising:
a first hole formed through the second angled portion, the first hole perpendicular to a first top surface of the second angled portion; and
a second hole formed in the second portion, the second hole perpendicular to a second top surface of the second portion, wherein the first fastener is configured to be inserted through the first hole and into the second hole.

7. The air duct interface of claim 2, wherein the first fastener is configured to be inserted through the second clamp and into the second portion.

8. A system for connecting an air duct to an aircraft engine, the system comprising:
a mating interface including:
a first angled portion extending in a first direction wherein the first angled portion includes a flat bottom surface and a top surface having a slope in a second direction that is perpendicular to the first direction; and
a second angled portion extending in a third direction that is opposite the first direction;
a gasket interface including:
a first portion extending in the first direction wherein the first portion includes a flat top surface; and
a second portion extending in the third direction, wherein the second portion includes a top face that has a slope in the second direction;
a first clamp having a first bottom surface with a slope in the second direction, the first clamp configured to be coupled to the first portion and further configured to receive the first angled portion between the first bottom surface and the first portion; and
a second clamp having a second bottom surface that is configured to be coupled to the second portion and to receive the second angled portion.

9. The system of claim 8, further comprising:
an exhaust duct including a first outer wall and a first opening, the first outer wall disposed circumferentially the first opening, wherein the mating interface is disposed circumferentially around the first outer wall; and
a turbine section inlet including a second outer wall and a second opening, the second outer wall disposed circumferentially around the second opening, wherein the gasket interface is disposed circumferentially around the second outer wall; and/or
wherein the system further comprises:
a first fastener inserted through the first clamp perpendicular to the flat top surface of the first portion; and
a second fastener inserted through the second clamp perpendicular to the top face of the second portion.

10. The system of claim 8 or 9, wherein the first clamp includes a first top surface extending in the first direction, a vertical side surface extending in the second direction, a bottom surface extending in the third direction, and the first bottom surface extending from the bottom surface to the first top surface.

11. The system of claim 8, 9 or 10, further comprising:
a third angled portion of the mating interface extending in a fifth direction perpendicular to the first direction and the second direction, the third angled portion including the flat bottom surface; and
a third portion extending in the fifth direction wherein the third portion includes the flat top surface; and
a third clamp having a third bottom surface with a slope in the second direction, the third clamp configured to be coupled to the third portion and further configured to receive the third angled portion between the third bottom surface and the third portion, and
wherein, optionally, the system further comprises:
a fourth angled portion extending in a sixth direction opposite the fifth direction;
a fourth portion extending in the sixth direction, wherein the fourth portion includes a first top face that has a slope in the second direction; and
a fourth clamp having a fourth bottom surface that is configured to be coupled to the fourth portion and to receive the fourth angled portion.

12. The system of any of claim 8 to 11, wherein the second clamp further includes a bottom surface opposite a second top surface, the bottom surface being parallel to the second top surface.

13. A method of manufacture, comprising:
installing an aircraft engine in a nacelle of an aircraft, the aircraft engine including a turbine section inlet wherein access to at least one side of the turbine section inlet is limited after installing the aircraft engine in the nacelle;
attaching an exhaust duct to the turbine section inlet of the aircraft engine with limited access to the turbine section inlet, the attaching including securing a mating interface of the exhaust duct to a gasket interface of the turbine section inlet; and
securing the mating interface of the exhaust duct to the gasket interface of the turbine section inlet using at least one fastener.

14. The method of claim 13, further comprising:
coupling a first clamp to a first side of the gasket interface of the turbine section inlet before installing the aircraft engine in the nacelle; and
sliding a first side of the mating interface of the exhaust duct into place between the first clamp and the gasket interface,
wherein, optionally, the method further comprises:
coupling a second clamp to a second side of the gasket interface, the second side being opposite the first side, after installing the aircraft engine in the nacelle; and
securing the second clamp to the second side of the gasket interface using the at least one faster, the second clamp securing the mating interface to the gasket interface; and
wherein, optionally, the method further comprises:
coupling a third clamp to a third side of the gasket interface, the third side adjacent the first side and the second side, before installing the aircraft engine in the nacelle; and
sliding a third side of the mating interface of the exhaust duct into place between the third clamp and the gasket interface.

15. The method of claim 13 or 14, wherein a first side of the mating interface includes a cavity formed therein, the cavity configured to receive a first side of the gasket interface, wherein attaching the exhaust duct to the turbine section inlet includes:
sliding the mating interface in a first direction over the gasket interface until the cavity formed in the first side of the mating interface is past a first end of the gasket interface; and
sliding the mating interface in a second direction opposite the first direction until the first side of the gasket interface engages the cavity; and/or
wherein the securing the mating interface to the gasket interface further includes inserting the at least one fastener through a first hole formed through the mating interface and into a second hole formed in the gasket interface.
